# EUROPÄISCHE PATENTANMELDUNG

(11) **EP 3 534 592 A1**
(43) Veröffentlichungstag der Anmeldung: **04.09.2019**
(21) Anmeldenummer: 18159125.6
(22) Anmeldetag: 28.02.2018
(51) Int. Cl.: H04L 29/08

(54) **VERFAHREN ZUR DATENÜBERMITTLUNG ZWISCHEN EINEM INDUSTRIELLEN AUTOMATISIERUNGSSYSTEM UND EINEM SERVER-SYSTEM ÜBER EIN WEITVERKEHRSNETZ UND DATENVERTEILEREINHEIT**

(71) Anmelder: Siemens Aktiengesellschaft, 80333 München (DE)
(72) Erfinder: Weinländer, Markus, 91230 Happurg (DE)

(57) **Zusammenfassung**

Zur Datenübermittlung zwischen einem industriellen Automatisierungssystem und einem Server-System über ein Weitverkehrsnetz übermitteln Automatisierungsgeräte Messwerte bzw. Zustandsinformationen sowie diesen zugeordnete Klassifizierungen über Kommunikationsverbindungen innerhalb des Automatisierungssystems an eine Datenverteilereinheit des Automatisierungssystems. Anhand der Klassifizierungen gliedert die Datenverteilereinheit die Messwerte bzw. Zustandsinformationen hierarchisch in für eine Datenübermittlung auswählbare Kategorien und übermittelt Messwerte bzw. Zustandsinformationen, die von für eine Datenübermittlung zum Server-System ausgewählten Kategorien umfasst sind, innerhalb einer vorgebbaren Anzahl von Kommunikationsverbindungen gebündelt über das Weitverkehrsnetz zum Server-System. Ereignisgesteuert bzw. in Abhängigkeit eines Betriebszustands des industriellen Automatisierungssystems initiiert, begrenzt hinsichtlich Bandbreite oder beendet die Datenverteilereinheit Kommunikationsverbindungen mit dem Server-System.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen im wesentlichen selbständigen Betrieb von Steuerungseinrichtungen, Sensoren, Maschinen und technischen Anlagen. Eine wesentliche Grundlage für eine zuverlässige Bereitstellung von Überwachungs-, Steuerungs- und Regelungsfunktionen mittels eines Prozessautomatisierungssystems besteht in einer vollständigen und korrekten Erfassung und Abbildung von Komponenten des industriellen Prozessautomatisierungssystems in einem Engineerung- bzw. Projektierungssystem.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

EP 3 208 999 A1 betrifft ein Datenübertragungssystem, das zumindest einen ersten Teilnehmer und einen zweiten Teilnehmer umfasst, wobei der zweite Teilnehmer in einem Automatisierungsnetz einer Automatisierungsanlage angeordnet ist. Zur bidirektionalen Datenübertragung zwischen dem ersten Teilnehmer und dem zweiten Teilnehmer ist eine Kommunikationsschnittstelle vorgesehen, die als Agent-Gateway ausgestaltet ist.

Aus EP 3 267 661 A1 ist ein Netzwerksystem bekannt, das einen ersten Netzwerkteilnehmer mit mehreren Netzwerkgeräten umfasst. Die Netzwerkgeräte weisen zur Identifikation Identifikationsparameter auf. Außerdem sind ein zweiter Netzwerkteilnehmer mit einer Cloud-Computing-Infrastruktur sowie ein Cloud Connector mit einer ersten Schnittstelle und einer zweiten Schnittstelle vorgesehen. Der Cloud Connector steht mittels der ersten Schnittstelle mit dem ersten Netzwerkteilnehmer in Verbindung und mittels der zweiten Schnittstelle mit dem zweiten Netzwerkteilnehmer in Verbindung. Darüber hinaus ist der Cloud Connector eingerichtet und ausgebildet, einen passiven Scan und einen aktiven Scan des ersten Netzwerkteilnehmers durchzuführen, so dass eine Identifikation von zumindest einem der Netzwerkgeräte durch den Cloud Connector bewerkstelligbar ist. Dabei ist zumindest ein Netzwerkgeräteprofil aus dem zweiten Netzwerkteilnehmer in den Cloud Connector ladbar. Der aktive Scan erfolgt auf Basis des geladenen zumindest einen Netzwerkgeräteprofils.

In EP 2 660 667 A2 ist ein Cloud-Gateway zur Kopplung eines industriellen Steuerungssystems an eine Cloud-Plattform beschrieben. Das Cloud-Gateway sammelt Daten von einer oder mehreren industriellen Steuerungen, Zählern, Sensoren oder anderen Automatisierungsgeräten. Optional führt das Cloud-Gateway führt zusätzliche Transformationen an den Daten durch, um einen Kontext hinzuzufügen, die Daten zusammenzufassen, zu filtern, neu zu formatieren bzw. zu verschlüsseln. Entsprechende Daten sendet das Cloud-Gateway an eine Cloud-Plattform, die durch eine oder mehrere Cloud-basierte Anwendungen oder Dienste verwendet wird. Das Cloud-Gateway kann Cloud-basierte Datenerfassung sowohl von stationären als auch mobilen industriellen Systemen ermöglichen. Außerdem kann das Cloud-Gateway auch Store-and-Forward-Logik unterstützen, wodurch industrielle Daten temporär im lokalen Speicher gespeichert werden können, falls eine Kommunikation zwischen dem Cloud-Gateway und der Cloud-Plattform gestört ist.

In IIOT-Systemen industriellen (Industrial Internet of Things) besteht eine Herausforderung darin, Daten von Sensoren oder Steuerungsgeräten auf Feldebene effizient in ein Cloud-System zu übertragen. Als kritisch erweisen sich neben einer zuverlässigen Verwaltung eines IoT-Netzwerks Aspekte, wie Anzahl von Netzwerkknoten oder dynamische Vorgänge auf Feldebene, insbesondere Anschluss neuer Geräte, Geräteparameter-Änderungen oder Topologie-Änderungen. Bei einer großen Anzahl von Automatisierungsgeräten, die mit einem Cloud-System kommunizieren, sind viele durch Netzwerk-Management dynamisch zu administrierende Kommunikationsverbindungen erforderlich. Entscheidend wird sein, dass entsprechende Administrationsaufgaben noch wirtschaftlich zu beherrschen sind.

Der vorliegenden Erfindung liegt daher die Aufgabe zugrunde, ein Verfahren Datenübermittlung zwischen einem industriellen Automatisierungssystem und einem Server-System anzugeben, das eine zuverlässige und effiziente Realisierung einer großen Anzahl von Kommunikationsbeziehungen ermöglicht, sowie eine geeignete Vorrichtung zur Durchführung des Verfahrens zu schaffen.

Diese Aufgabe wird erfindungsgemäß durch ein Verfahren mit den in Anspruch 1 angegebenen Merkmalen und durch eine Datenverteilereinheit mit den in Anspruch 13 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur Datenübermittlung zwischen einem industriellen Automatisierungssystem und einem Server-System über ein Weitverkehrsnetz übermitteln Automatisierungsgeräte Messwerte bzw. Zustandsinformationen sowie diesen zugeordnete Klassifizierungen über Kommunikationsverbindungen innerhalb des Automatisierungssystems an eine Datenverteilereinheit des Automatisierungssystems. Die Messwerte bzw. Zustandsinformationen können beispielsweise semantische Attribute entsprechend OPC Unified Architecture als zugeordnete Klassifizierungen umfassen. Anhand der Klassifizierungen gliedert die Datenverteilereinheit die Messwerte bzw. Zustandsinformationen hierarchisch in für eine Datenübermittlung auswählbare Kategorien.

Erfindungsgemäß übermittelt die Datenverteilereinheit Messwerte bzw. Zustandsinformationen, die von für eine Datenübermittlung zum Server-System ausgewählten Kategorien umfasst sind, innerhalb einer vorgebbaren Anzahl von Kommunikationsverbindungen gebündelt über das Weitverkehrsnetz zum Server-System. Ereignisgesteuert bzw. in Abhängigkeit eines Betriebszustands des industriellen Automatisierungssystems initiiert, begrenzt hinsichtlich Bandbreite oder beendet die Datenverteilereinheit Kommunikationsverbindungen mit dem Server-System. Auf diese Weise kann eine Reduktion der Anzahl von Kommunikationsverbindungen zwischen Feldebene und einem Cloud-System realisiert werden, so dass Administrationsaufgaben noch beherrschbar bleiben und verlässlich erledigt werden können.

Insbesondere können die Messwerte bzw. Zustandsinformationen entsprechend Message Queueing Telemetry Transport Protocol (MQTT) durch die Automatisierungsgeräte an die Datenverteilereinheit übermittelt werden. Vorzugsweise sind die den Messwerten bzw. Zustandsinformationen zugeordnete Klassifizierungen MQTT-Topics sind, und die Messwerte bzw. Zustandsinformationen umfassende Nachrichten werden mit einer vorgebbaren Quality of Service übermittelt.

Entsprechend einer vorteilhaften Ausgestaltung der vorliegenden Erfindung übermittelt die Datenverteilereinheit die Messwerte bzw. Zustandsinformationen über die Kommunikationsverbindungen mit dem Server-System in Abhängigkeit des Betriebszustandes des Automatisierungssystems bzw. nimmt in Abhängigkeit des Betriebszustandes Steuerungsinformationen vom Server-System entgegen. Vorzugsweise beendet oder pausiert die Datenverteilereinheit die Kommunikationsverbindungen mit dem Server-System bei Störungen im Automatisierungssystem. Auf diese Weise kann eine Kommunikation mit einem Cloud-System zurückgestellt werden, bis im Automatisierungssystem ein konsistenter Prozessstatus erreicht ist, der ansonsten durch Interferenzen infolge der Kommunikation mit dem Cloud-System gefährdet sein könnte.

Die Datenverteilereinheit ermittelt entsprechend einer bevorzugten Ausgestaltung der vorliegenden Erfindung aus durch die Automatisierungsgeräte übermittelten Messwerten bzw. Zustandsinformationen aggregierte Messwerte bzw. Zustandsinformationen und übermittelt Messwerte bzw. Zustandsinformationen in aggregierter Form an das Server-System. Somit können beispielsweise Messwerte oder Zustandsinformationen regelbasiert miteinander im Sinn einer minimierten zu übertragenden Datenmenge verrechnet werden.

Darüber hinaus bildet bei dem die Datenverteilereinheit für Datenverkehr vom Server-System in Richtung des industriellen Automatisierungssystems jeweils einen Endpunkt der Kommunikationsverbindungen mit dem Server-System. Damit bleiben Netzwerk-Management-Aufgaben auch diesbezüglich noch beherrschbar. Dies gilt auch für Ausführungsvarianten, bei denen mehrere Server-Systeme vorgesehen sind. In diesem Fall übermittelt die Datenverteilereinheit Messwerte bzw. Zustandsinformationen regelbasiert an ausgewählte Server-Systeme. Damit können vielfältige Lösungen unterschiedlicher Anbieter oder Betreiber von Cloud-Systemen genutzt werden.

Entsprechend einer weiteren vorteilhaften Ausgestaltung der vorliegenden Erfindung speichert die Datenverteilereinheit an das Server-System zu übermittelnde Messwerte bzw. Zustandsinformationen zwischen, die innerhalb eines vorgebbaren Zeitintervalls bzw. bis zu einer vorgebbaren Datenmenge durch Automatisierungsgeräte übermittelt werden. Die Datenverteilereinheit übermittelt Messwerte bzw. Zustandsinformationen dann pro Zeitintervall bzw. nach Datenmenge kumuliert zum Server-System. Auf diese Weise kann eine Kommunikation mit dem Server-System in einem Batch-Betrieb zusammengefasst werden. Darüber hinaus kann die Datenverteilereinheit die Messwerte bzw. Zustandsinformationen ereignisgesteuert zur Übermittlung von den Automatisierungsgeräten anfordern, wobei eine Übermittlung der Messwerte bzw. Zustandsinformationen erst bei Vorliegen definierbarer Trigger-Bedingungen erfolgt. Die Trigger-Bedingungen können beispielsweise werte- oder zeitbasiert oder bei definierten Ereignissen in auf den Automatisierungsgeräten ablaufenden Steuerungsprogrammen erfüllt sein.

Die erfindungsgemäße Datenverteilereinheit ist zur Durchführung eines Verfahrens entsprechend vorangehenden Ausführungen vorgesehen sowie dafür ausgestaltet und eingerichtet, von Automatisierungsgeräten eines einem industriellen Automatisierungssystems Messwerte bzw. Zustandsinformationen sowie diesen zugeordnete Klassifizierungen über Kommunikationsverbindungen innerhalb des Automatisierungssystems zu empfangen. Zusätzlich ist die Datenverteilereinheit dafür ausgestaltet und eingerichtet, die Messwerte bzw. Zustandsinformationen anhand der Klassifizierungen hierarchisch in für eine Datenübermittlung auswählbare Kategorien zu gliedern.

Erfindungsgemäß ist die Datenverteilereinheit dafür ausgestaltet und eingerichtet, Messwerte bzw. Zustandsinformationen, die von für eine Datenübermittlung über ein Weitverkehrsnetz zu einem Server-System ausgewählten Kategorien umfasst sind, innerhalb einer vorgebbaren Anzahl von Kommunikationsverbindungen gebündelt über das Weitverkehrsnetz zum Server-System zu übermitteln. Darüber hinaus ist die Datenverteilereinheit dafür ausgestaltet und eingerichtet, Kommunikationsverbindungen mit dem Server-System ereignisgesteuert bzw. in Abhängigkeit eines Betriebszustands des industriellen Automatisierungssystems zu initiieren, hinsichtlich Bandbreite zu begrenzen oder zu beenden.

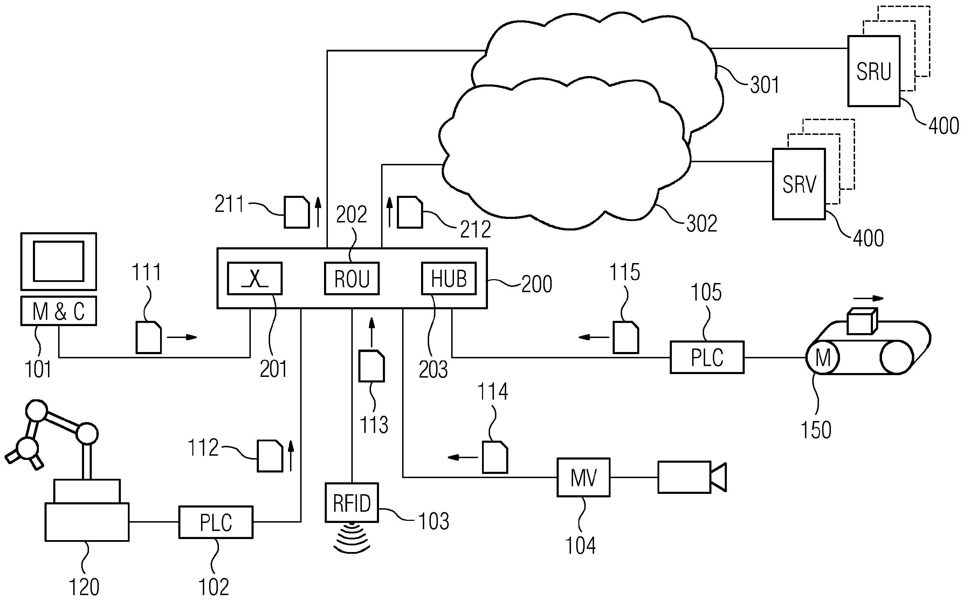

Die vorliegende Erfindung wird nachfolgend an einem Ausführungsbeispiel anhand der Zeichnung näher erläutert. Es zeigt die
- Figur: ein mehrere Automatisierungsgeräte umfassendes industrielles Automatisierungssystem, das über Internet mit einem Cloud-Computing-System verbunden ist.

Das in der Figur dargestellte industrielle Automatisierungssystem umfasst mehrere Automatisierungsgeräte 101-105, die im vorliegenden Ausführungsbeispiel zumindest logisch an einen Plant-Data-Hub 200 als Datenverteilereinheit bzw. Netzinfrastrukturgerät angebunden sind. Der Plant-Data-Hub 200 ist über Internet-Kommunikationsverbindungen 301, 302 mit einem oder mehreren Cloud-Computing-Systemen 400 verbunden. Vorzugsweise ist dem Plant-Data-Hub 200 hierbei ein Firewall-System 204 vorgeschaltet, das grundsätzlich auch in den Plant-Data-Hub 200 integriert sein kann. Die Cloud-Computing-Systeme 400 umfassen jeweils mehrere Server, durch die IT-Infrastruktur, wie Speicherplatz, Rechenleistung oder Anwendungssoftware, als Dienst bereitgestellt wird.

Die Automatisierungsgeräte können beispielsweise Bedien- und Beobachtungsstationen 101, speicherprogrammierbare Steuerungen 102, 105, RFID-Lesegeräte 103 oder Systeme 104 für maschinelle Bildverarbeitung sein. Neben den Automatisierungsgeräten 101-105 können auch Netzinfrastrukturgeräte, wie Switche, Router oder Firewalls, direkt oder mittelbar mit dem Plant-Data-Hub 200 verbunden sein. Diese Netzinfrastrukturgeräte dienen insbesondere zum Anschluss von speicherprogrammierbaren Steuerungen, Eingabe/Ausgabe-Einheiten (I/O-Module) oder Bedien- und Beobachtungsstationen des industriellen Automatisierungssystems. Die speicherprogrammierbaren Steuerungen 102, 105 umfassen im vorliegenden Ausführungsbeispiel jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind.

Über Kommunikationsmodule können die speicherprogrammierbare Steuerungen 102, 105 beispielsweise mit dem Plant-Data-Hub 200, einem Switch oder Router oder zusätzlich mit einem Feldbus verbunden werden. Eingabe/Ausgabe-Einheiten dienen einem Austausch von Steuerungs- und Messgrößen zwischen den speicherprogrammierbaren Steuerungen 102, 105 und durch die speicherprogrammierbaren Steuerungen 102, 105 gesteuerten Maschinen oder Vorrichtungen 120, 150. Die Zentraleinheiten sind insbesondere für eine Ermittlung geeigneter Steuerungsgrößen aus erfassten Messgrößen vorgesehen. Obige Komponenten der speicherprogrammierbaren Steuerungen 102, 105 sind im vorliegenden Ausführungsbeispiel über ein Rückwandbus-System miteinander verbunden.

Eine Bedien- und Beobachtungsstation 101 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 101 zur Anzeige von Werten eines Regelungskreises und zur Veränderung von Regelungsparametern verwendet. Bedien- und Beobachtungsstationen 101 umfassen zumindest eine graphische Benutzerschnittstelle, ein Eingabegerät, eine Prozessoreinheit und ein Kommunikationsmodul.

Der Plant-Data-Hub 200 umfasst im vorliegenden Ausführungsbeispiel einen integrierten Switch 201, der insbesondere zur Anbindung der Automatisierungsgeräte 101-105 vorgesehen ist, ein Router-Modul 202 für die Internet-Kommunikationsverbindungen 301, 302 sowie eine Data-Hub-Funktionseinheit 203. Die Data-Hub-Funktionseinheit 203 ist dafür ausgestaltet und eingerichtet, von den Automatisierungsgeräten übermittelte Nachrichten 111-115 mit Messwerten bzw. Zustandsinformationen sowie diesen zugeordnete Klassifizierungen über Kommunikationsverbindungen oder Datenlinks innerhalb des Automatisierungssystems zu empfangen.

Die Messwerte bzw. Zustandsinformationen können beispielsweise semantische Attribute entsprechend OPC Unified Architecture als zugeordnete Klassifizierungen umfassen. Alternativ dazu können die Messwerte bzw. Zustandsinformationen entsprechend Message Queueing Telemetry Transport Protocol (MQTT) durch die Automatisierungsgeräte 101-105 an den Plant-Data-Hub 200 übermittelt werden. In diesem Fall sind die den Messwerten bzw. Zustandsinformationen zugeordnete Klassifizierungen MQTT-Topics sind, und die Messwerte bzw. Zustandsinformationen umfassende Nachrichten 111-115 werden mit einer vorgebbaren Quality of Service an den Plant-Data-Hub 200 übermittelt. Entsprechend einer weiteren Alternative können die Messwerte bzw. Zustandsinformationen beispielsweise auch entsprechend Advanced Message Queuing Protocol (AMQP) übermittelt werden.

Die Data-Hub-Funktionseinheit 203 gliedert die durch die Automatisierungsgeräte 101-105 übermittelten Messwerte bzw. Zustandsinformationen anhand der Klassifizierungen hierarchisch in für eine Datenübermittlung auswählbare Kategorien. Darüber hinaus übermittelt die Data-Hub-Funktionseinheit 203 Messwerte bzw. Zustandsinformationen, die von für eine Datenübermittlung zu einem Cloud-Computing-System 400 ausgewählten Kategorien umfasst sind, innerhalb einer vorgebbaren Anzahl von Internet-Kommunikationsverbindungen, insbesondere TCP/IP-Verbindungen, gebündelt zum jeweiligen Cloud-Computing-System 400. Bei mehreren vorhandenen Cloud-Computing-Systemen 400 erfolgt eine Übermittlung der Messwerte bzw. Zustandsinformationen regelbasiert an ein oder mehrere ausgewählte Cloud-Computing-Systeme 400.

Außerdem ermittelt die Data-Hub-Funktionseinheit 203 aus durch die Automatisierungsgeräte 101-105 übermittelten Messwerten bzw. Zustandsinformationen vorzugsweise aggregierte Messwerte bzw. Zustandsinformationen und übermittelt Nachrichten 211, 212 mit den Messwerte bzw. Zustandsinformationen in aggregierter Form an das jeweilige Cloud-Computing-System 400. In Abhängigkeit eines Betriebszustands des industriellen Automatisierungssystems bzw. ereignisgesteuert initiiert, begrenzt hinsichtlich Bandbreite oder beendet die Data-Hub-Funktionseinheit 203 Internet-Kommunikationsverbindungen mit dem jeweiligen Cloud-Computing-System 400. Auch für Datenverkehr vom jeweiligen Cloud-Computing-System 400 in Richtung des industriellen Automatisierungssystems bildet der Plant-Data-Hub 200 jeweils einen Endpunkt der Internet-Kommunikationsverbindungen mit den Cloud-Computing-Systemen 400. Damit können auch von den Cloud-Computing-Systemen 400 ausgehende Kommunikationsverbindungen auf eine per Netzwerk-Management handhabbare Anzahl begrenzt werden.

Der Plant-Data-Hub 200 speichert an die Cloud-Computing-Systeme 400 zu übermittelnde Messwerte bzw. Zustandsinformationen zwischen, die innerhalb eines vorgebbaren Zeitintervalls bzw. bis zu einer vorgebbaren Datenmenge durch die Automatisierungsgeräte 101-105 übermittelt werden, und übermittelt diese pro Zeitintervall bzw. nach Datenmenge kumuliert zum Server-System. Auf diese Weise können zu übermittelnde Daten in Batches zusammengefasst werden, um Verbindungszeiten und hierdurch verursachte Kosten zu reduzieren.

Entsprechend einer weiteren vorteilhaften Ausführungsvariante fordert der Plant-Data-Hub 200 b die Messwerte bzw. Zustandsinformationen ereignisgesteuert zur Übermittlung von den Automatisierungsgeräten an. Dabei erfolgt eine Übermittlung der Messwerte bzw. Zustandsinformationen erst bei Vorliegen definierbarer Trigger-Bedingungen. Die Trigger-Bedingungen können insbesondere werte- oder zeitbasiert oder bei definierten Ereignissen in auf den Automatisierungsgeräten ablaufenden Steuerungsprogrammen erfüllt sein.

Der Plant-Data-Hub 200 nimmt in Abhängigkeit des Betriebszustandes des industriellen Automatisierungssystems Steuerungsinformationen von den Cloud-Computing-Systemen 400 entgegen und übermittelt auch die Messwerte bzw. Zustandsinformationen dementsprechend über die Internet-Kommunikationsverbindungen 301, 302. Insbesondere beendet oder pausiert der Plant-Data-Hub 200 bei Störungen im Automatisierungssystem sämtliche Kommunikationsverbindungen mit den Cloud-Computing-Systemen 400.

Im vorliegenden Ausführungsbeispiel hält der Plant-Data-Hub 200 für die Cloud-Computing-Systeme 400 auch historische Daten bereit, die entweder vom Plant-Data-Hub 200 abgefragt oder automatisiert aufgrund definierter Ereignisse zu den Cloud-Computing-Systemen 400 übermittelt werden. Hierzu kann der Plant-Data-Hub 200 als OPC UA Client/Server Proxy mit den Cloud-Computing-Systemen 400 kommunizieren, ohne auf das jeweilige Automatisierungsgerät 101-105 zurückgreifen zu müssen. Zusätzlich kann der Plant-Data-Hub 200 dafür ausgestaltet und eingerichtet sein, sicherheitsrelevante Aufgaben zur Kommunikation mit den Cloud-Computing-Systemen 400 durchzuführen, beispielsweise Ver- und Entschlüsselung der Internet-Kommunikationsverbindungen 301, 302 oder Deep-Packet-Inspection.

## Patentansprüche

1. Verfahren zur Datenübermittlung zwischen einem industriellen Automatisierungssystem und einem Server-System über ein Weitverkehrsnetz, bei dem
- Automatisierungsgeräte (101-105) Messwerte und/oder Zustandsinformationen sowie diesen zugeordnete Klassifizierungen über Kommunikationsverbindungen innerhalb des Automatisierungssystems an eine Datenverteilereinheit (200) des Automatisierungssystems übermitteln,
- die Datenverteilereinheit (200) die Messwerte und/oder Zustandsinformationen anhand der Klassifizierungen hierarchisch in für eine Datenübermittlung auswählbare Kategorien gliedert,
- die Datenverteilereinheit (200) Messwerte und/oder Zustandsinformationen, die von für eine Datenübermittlung zum Server-System (400) ausgewählten Kategorien umfasst sind, innerhalb einer vorgebbaren Anzahl von Kommunikationsverbindungen (301, 302) gebündelt über das Weitverkehrsnetz zum Server-System (400) übermittelt,
- die Datenverteilereinheit (200) Kommunikationsverbindungen (301, 302) mit dem Server-System ereignisgesteuert und/oder in Abhängigkeit eines Betriebszustands des industriellen Automatisierungssystems initiiert, hinsichtlich Bandbreite begrenzt oder beendet.

2. Verfahren nach Anspruch 1,
bei dem die Datenverteilereinheit die Messwerte und/oder Zustandsinformationen in Abhängigkeit des Betriebszustandes des Automatisierungssystems über die Kommunikationsverbindungen mit dem Server-System übermittelt und/oder in Abhängigkeit des Betriebszustandes Steuerungsinformationen vom Server-System entgegen nimmt.

3. Verfahren nach Anspruch 2,
bei dem die Datenverteilereinheit die Kommunikationsverbindungen mit dem Server-System bei Störungen im Automatisierungssystem beendet oder pausiert.

4. Verfahren nach einem der Ansprüche 1 bis 3,
bei dem die Datenverteilereinheit aus durch die Automatisierungsgeräte übermittelten Messwerten und/oder Zustandsinformationen aggregierte Messwerte und/oder Zustandsinformationen ermittelt und Messwerte und/oder Zustandsinformationen in aggregierter Form an das Server-System übermittelt.

5. Verfahren nach einem der Ansprüche 1 bis 4,
bei dem die Datenverteilereinheit für Datenverkehr vom Server-System in Richtung des industriellen Automatisierungssystems jeweils einen Endpunkt der Kommunikationsverbindungen mit dem Server-System bildet.

6. Verfahren nach einem der Ansprüche 1 bis 5,
bei dem mehrere Server-Systeme vorgesehen sind und bei dem die Datenverteilereinheit Messwerte und/oder Zustandsinformationen regelbasiert an ausgewählte Server-Systeme übermittelt.

7. Verfahren nach einem der Ansprüche 1 bis 6,
bei dem die Datenverteilereinheit an das Server-System zu übermittelnde Messwerte und/oder Zustandsinformationen zwischenspeichert, die innerhalb eines vorgebbaren Zeitintervalls und/oder bis zu einer vorgebbaren Datenmenge durch Automatisierungsgeräte übermittelt werden, und pro Zeitintervall und/oder nach Datenmenge kumuliert zum Server-System übermittelt.

8. Verfahren nach einem der Ansprüche 1 bis 7,
bei dem die Messwerte und/oder Zustandsinformationen semantische Attribute entsprechend OPC Unified Architecture als zugeordnete Klassifizierungen umfassen.

9. Verfahren nach einem der Ansprüche 1 bis 7,
bei dem die Messwerte und/oder Zustandsinformationen entsprechend Message Queueing Telemetry Transport Protocol durch die Automatisierungsgeräte an die Datenverteilereinheit übermittelt werden.

10. Verfahren nach Anspruch 9,
bei dem die den Messwerten und/oder Zustandsinformationen zugeordnete Klassifizierungen MQTT-Topics sind und die Messwerte und/oder Zustandsinformationen umfassende Nachrichten mit einer vorgebbaren Quality of Service übermittelt werden.

11. Verfahren nach einem der Ansprüche 1 bis 10,
bei dem die Datenverteilereinheit die Messwerte und/oder Zustandsinformationen ereignisgesteuert zur Übermittlung von den Automatisierungsgeräten anfordert und eine Übermittlung der Messwerte und/oder Zustandsinformationen erst bei Vorliegen definierbarer Trigger-Bedingungen erfolgt.

12. Verfahren nach Anspruch 11,
bei dem die Trigger-Bedingungen werte- oder zeitbasiert sind oder bei definierten Ereignissen in auf den Automatisierungsgeräten ablaufenden Steuerungsprogrammen erfüllt sind.

13. Datenverteilereinheit zur Durchführung eines Verfahrens nach einem der Ansprüche 1 bis 12, wobei die Datenverteilereinheit dafür ausgestaltet und eingerichtet ist,
- von Automatisierungsgeräten eines einem industriellen Automatisierungssystems Messwerte und/oder Zustandsinformationen sowie diesen zugeordnete Klassifizierungen über Kommunikationsverbindungen innerhalb des Automatisierungssystems zu empfangen,
- die Messwerte und/oder Zustandsinformationen anhand der Klassifizierungen hierarchisch in für eine Datenübermittlung auswählbare Kategorien zu gliedern,
- Messwerte und/oder Zustandsinformationen, die von für eine Datenübermittlung über ein Weitverkehrsnetz zu einem Server-System ausgewählten Kategorien umfasst sind, innerhalb einer vorgebbaren Anzahl von Kommunikationsverbindungen gebündelt über das Weitverkehrsnetz zum Server-System zu übermitteln,
- Kommunikationsverbindungen mit dem Server-System ereignisgesteuert und/oder in Abhängigkeit eines Betriebszustands des industriellen Automatisierungssystems zu initiieren, hinsichtlich Bandbreite zu begrenzen oder zu beenden.
